# EUROPEAN PATENT APPLICATION

(11) **EP 3 962 200 A1**
(43) Date of publication of application: **02.03.2022**
(21) Application number: 19926680.0
(22) Date of filing: 26.04.2019
(51) Int. Cl.: H04W 72/04, H04W 72/12

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: HARADA, Hiroki, Tokyo 100-6150 (JP); MURAYAMA, Daisuke, Tokyo 100-6150 (JP); KURITA, Daisuke, Tokyo 100-6150 (JP)
(74) Representative: Hoffmann Eitle
(86) International application number: PCT/JP2019/018118
(87) International publication number: WO 2020/217512

(57) **Abstract**

A user terminal includes a receiving section that receives a downlink control channel and a downlink shared channel scheduled by the downlink control channel in one slot, and a control section that decodes the downlink shared channel, wherein a start symbol capable of being specified by a mapping type used by the downlink shared channel includes a symbol after first four symbol, and the number of symbols capable of being specified by the mapping type includes a value other than 2, 4, and 7. According to an aspect of the present disclosure, appropriate communication can be performed in an unlicensed band.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G plus (+)," "New Radio (NR)," "3GPP Rel. 15 (or later versions)," and so on) are also under study.

In an existing LTE system (e.g., Rel. 8 to Rel. 12), specifications have been conducted based on an assumption that the system is exclusively operated in a frequency band (referred to as a licensed band, a licensed carrier, a licensed component carrier (licensed CC), and so on) licensed to a communication carrier (operator). The licensed CC of 800 MHz, 1.7 GHz, 2 GHz, or the like is used for example.

In existing LTE systems (e.g., Rel. 13), in order to expand a frequency band, use of a frequency band different from the above-described licensed band (also referred to as an unlicensed band, an unlicensed carrier, or an unlicensed CC) is supported. The unlicensed band is assumed to be, for example, a 2.4 GHz band, a 5 GHz band, and the like in which Wi-Fi (registered trademark) and Bluetooth (registered trademark) can be used.

Specifically, in Rel. 13, carrier aggregation (CA) that aggregates a carrier (CC) in the licensed band with a carrier (CC) in the unlicensed band is supported. Communication thus performed by using the unlicensed band together with the licensed band is referred to as License-Assisted Access (LAA).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., 5G, 5G+, NR, and Rel. 15 (or later versions)), a transmitting apparatus (which is, for example, a base station in downlink (DL), and is, for example, a user terminal in uplink (UL)) performs listening to check the presence or absence of transmission by another apparatus (e.g., a base station, a user terminal, a Wi-Fi apparatus, or the like) before transmission of data in an unlicensed band.

It is conceivable that such radio communication systems are in accordance with regulation or requirement in the unlicensed band in order to coexist with another system in the unlicensed band.

However, unless an operation in the unlicensed band is definitely determined, an appropriate communication in the unlicensed band may be unavailable, such as an operation non-compliant with the regulation under certain communication conditions, reduction in utilization efficiency of radio resources, and the like.

Thus, an object of the present disclosure is to provide a user terminal and a radio communication method that perform appropriate communication in an unlicensed band.

### Solution to Problem

A user terminal according to an aspect of the present disclosure includes a receiving section that receives a downlink control channel and a downlink shared channel scheduled by the downlink control channel in one slot, and a control section that decodes the downlink shared channel, wherein a start symbol capable of being specified by a mapping type used by the downlink shared channel includes a symbol after first four symbol, and the number of symbols capable of being specified by the mapping type includes a value other than 2, 4, and 7.

### Advantageous Effects of Invention

According to an aspect of the present disclosure, it is possible to perform appropriate communication in an unlicensed band.

### Brief Description of Drawings

FIG. 1 is a diagram to show an example of PDSCH time domain resource allocation for a multiplexing pattern;
FIG. 2 is a diagram to show an example of a default PDSCH time domain resource allocation A for normal CP;
FIG. 3A and FIG. 3B are diagrams to show examples of a DRS configuration in a case that arrangement 1 or arrangement 3 is used;
FIGS. 4A and FIG. 4B are diagrams to show examples of a DRS configuration in a case that arrangement 2 is used;
FIG. 5 is a diagram to show an example of a start symbol and the number of symbols of a PDSCH;
FIG. 6 is a diagram to show an example of a PDSCH transmission method for each transmission start timing;
FIG. 7 is a diagram to show an example of a PDCCH monitoring occasion within one slot;
FIG. 8 is a diagram to show an example of the DRS configuration;
FIGA. 9A and 9B are diagrams to show other examples of the DRS configuration;
FIG. 10 is a diagram to show an example of the PDSCH transmission method in a case that the number of PDSCH symbols is 2, 4, 6, 7, and 9;
FIG. 11 is a diagram to show an example of the PDSCH transmission method in a case that the number of PDSCH symbols is 2, 4, 6, and 7;
FIG. 12 is a diagram to show an example of PDSCH transmission method 1;
FIG. 13 is a diagram to show an example of PDSCH transmission method 2;
FIG. 14 is a diagram to show an example of PDSCH transmission method 3;
FIG. 15 is a diagram to show an example of a schematic structure of a radio communication system according to one embodiment;
FIG. 16 is a diagram to show an example of a structure of a base station according to one embodiment;
FIG. 17 is a diagram to show an example of a structure of a user terminal according to one embodiment; and
FIG. 18 is a diagram to show an example of a hardware structure of the base station and the user terminal according to one embodiment.

### Description of Embodiments

### <Unlicensed Band>

In an unlicensed band (e.g., a 2.4 GHz band or a 5 GHz band), it is assumed that, for example, a plurality of systems such as a Wi-Fi system, a system supporting LAA (an LAA system) coexist, so avoidance of collision and/or control of interference for transmissions between the plurality of systems may be required.

For example, the Wi-Fi system using the unlicensed band adopts Carrier Sense Multiple Access (CSMA)/Collision Avoidance (CA) for the purpose of avoidance of collision and/or control of interference. In the CSMA/CA, a Distributed access Inter Frame Space (DIFS) is provided for a certain period of time before transmission, where a transmitting apparatus confirms there are no other transmission signals (carrier sensing), and then transmits data. After transmitting the data, the transmitting apparatus waits for ACKnowledgement (ACK) from a receiving apparatus. In a case that the transmitting apparatus fails to receive the ACK within a certain period of time, the transmitting apparatus determines that a collision occurs and performs retransmission.

In LAA of the existing LTE systems (e.g., Rel. 13), a transmitting apparatus for transmitting data performs, before transmitting the data in the unlicensed band, listening for confirming whether there is transmission of another apparatus (e.g., a base station, a user terminal, a Wi-Fi apparatus, or the like) (Listen Before Talk (LBT), Clear Channel Assessment (CCA), carrier sense, channel sensing, sensing, channel access procedure).

The transmitting apparatus may be the base station (e.g., gNB (gNodeB)) in downlink (DL), or the user terminal (e.g., User Equipment (UE)) in uplink (UL), for example. The receiving apparatus for receiving the data from the transmitting apparatus may be the user terminal in the DL, or the base station in the UL, for example.

In LAA of the existing LTE systems, the transmitting apparatus starts to transmit data after a certain time period (e.g., immediately after or back off duration) from when no transmission of another apparatus (idle state) is detected in LBT.

Four categories described below are defined as channel access methods in LTE LAA.
- Category 1: A node performs transmission without the LBT.
- Category 2: A node performs carrier sense for a fixed sensing time before transmission, and performs transmission in a case that a channel is available.
- Category 3: A node generates a value at random from a certain range (random back off) before transmission, repeatedly performs carrier sense for a fixed sensing slot time, and performs transmission in a case that it can be confirmed that a channel is available over the slots of the value.
- Category 4: A node generates a value at random from a certain range (random back off) before transmission, repeatedly performs carrier sense for a fixed sensing slot time, and performs transmission in a case that it can be confirmed that a channel is available over the slots of the value. The node changes a range of the random back off value (contention window size) depending on communication failure conditions due to collision with communications of other systems.

A study is underway, as an LBT regulation, to perform LBT depending on a length of a gap between two transmissions (a non-transmission duration, a duration while received power is equal to or less than a certain threshold, or the like).

A study is underway to use the unlicensed band also in the future radio communication systems (also referred to as 5G, 5G+, NR, 3GPP Rel. 15 or later versions, for example). An NR system using the unlicensed band may be referred as an NR-Unlicensed (U) system, an NR LAA system, and the like.

The NR-U system may use a dual connectivity (DC) of the licensed band and the unlicensed band, Stand-Alone (SA) in the unlicensed band.

In the NR-U, the base station (e.g., gNB) or the UE acquires a transmission opportunity (TxOP) and performs transmission in a case that an LBT result is idle. The base station or the UE does not perform transmission in a case that the LBT result is busy (LBT-busy). A time of the transmission opportunity is referred to as a Channel Occupancy Time (COT).

It is studied that the NR-U uses signals including at least a Synchronization Signal (SS)/Physical Broadcast CHannel (PBCH) block (SS block (SSB)).

The SS/PBCH block may be a signal block including a primary synchronization signal (PSS), a secondary synchronization signal (SSS), and a broadcast channel (Physical Broadcast Channel (PBCH)) (and demodulation reference signal (DMRS) for PBCH). The SS/PBCH block may be referred to as a synchronization signal block (SSB).

In the unlicensed band procedure using the SSB, the following is under study.
- There is no gap in a time range in which the signal is transmitted in at least one beam.
- An occupied bandwidth is filled.
- The channel occupancy time of the signal is minimized.
- Characteristics for facilitating a rapid channel access.

A signal is under study that includes a Channel State Information (CSI)-Reference Signal (RS) within one contiguous burst signal (DL transmission burst), an SSB burst set (set of SSBs), and a control resource set (CORESET) and PDSCH associated with the SSB. This signal may be referred to as a discovery reference signal (DRS, NR-U DRS, or the like).

The CORESET associated with SSB may be referred to as a Remaining Minimum System Information (RMSI)-CORESET, a CORESET-zero (CORESET 0), or the like. The RMSI may be referred to as System Information Block 1 (SIB 1). The PDSCH associated with SSB may be a PDSCH carrying RMSI (RMSI PDSCH), or a PDSCH scheduled by using a PDCCH within the RMSI-CORESET (the DCI including CRC scrambled by a System Information (SI)-Radio Network Temporary Identifier (RNTI)).

The SSBs having different SSB indices may be transmitted using different beams (base station transmission beams). The SSB and the RMSI PDCCH and RMSI PDSCH corresponding to the SSB may be transmitted using the same beam.

The node in the NR-U (e.g., the base station, the UE) confirms that a channel is available (idle) through LBT, and then, starts transmission because coexistence with other systems or other operators.

The node, after the LBT succeeds, may continue the transmission for a given time period after starting the transmission. However, in a case that the transmission is discontinued midway for a certain gap period or more, LBT is required again before next transmission because another system may use the channel. A duration capable of continuous transmission depends on an LBT category to be used or a priority class in LBT. The priority class may be the contention window size for the random back off, or the like. The shorter the LBT duration is (the higher the priority class is), the shorter the time capable of continuous transmission is.

The node needs to perform transmission in the broadband in compliance with a transmission bandwidth regulation in the unlicensed band. For example, a transmission bandwidth regulation in Europe is 80% or more of a system bandwidth. Narrow band transmission may not be detected by other systems or other operators performing LBT in the broadband and collide.

The node preferably performs transmission in a short time as much as possible. A plurality of coexisting systems can shorten their channel occupancy times to efficiently share the resources.

The base station in the NR-U preferably transmits the SSBs with the different beams (QCL parameters, beam indices, SSB indices), the RMSI PDCCH associated with the SSBs (PDCCH for RMSI PDSCH scheduling), and the RMSI PDSCH by using a broad band as much as possible and in a short time as much as possible. With this configuration, the base station can apply the high priority class (LBT category with short LBT duration) to the SSB/RMSI (DRS) transmission and can expect LBT to succeed with a high probability. The base station can easily meet the transmission bandwidth regulation by the transmission in the broadband. The base station can perform transmission in a short time to prevent the transmission from discontinuing.

It is studied that a bandwidth of an initial downlink (DL) bandwidth part (BWP) for the NR-U (UE channel bandwidth) is 20 MHz. The reason why is because a channel bandwidth of the Wi-Fi being a coexistence system is 20 MHz. In this case, the SSB, the RMSI PDCCH, and the RMSI PDSCH need to be included in a 20 MHz bandwidth.

In the NR-U DRS, no gap within a transmission duration in at least one beam can prevent another system from interrupting in the transmission duration.

The NR-U DRS may be transmitted periodically regardless of whether there is a UE in an active state, or a UE in the idle state. With this configuration, the base station can periodically transmit the signal required for the channel access procedure by using simple LBT and the UE can rapidly access to a cell in the NR-U.

The NR-U DRS restricts the number of required channel accesses and allocates signals closer to each other in a short time to achieve the short channel occupancy time. The NR-U DRS may support a stand-alone (SA) NR-U.

### <Multiplexing Pattern>

In Rel. 15 NR, multiplexing patterns 1 to 3 for the SSB and the RMSI are defined.

Multiplexing pattern 1: the SSB and the RMSI PDCCH CORESET (the CORESET including the RMSI PDCCH, CORESET #0) are time division multiplexed (TDMed). In other words, the SSB and the CORESET are transmitted at different times, and a band for the CORESET includes a band for the SSB. The RMSI PDSCH may be TDMed with the RMSI PDCCH CORESET.

In a case that the SSB and the CORESET are failed to be frequency division multiplexed (FDMed) in a band having a narrow channel bandwidth, it is effective to TDM the SSB and the CORESET. In a case that a plurality of beams can be transmitted at the same frequency and at the same time by digital beamforming in a low frequency band (e.g., frequency range (FR) is 1.6 GHz or less), FDMing with the same beam is not necessary.

Multiplexing pattern 2: the SSB and the RMSI PDCCH CORESET are TDMed and FDMed.

In a case that an SSB SCS (a subcarrier spacing (SCS) of the SSB) is different from a an RMSI SCS (an SCS of the RMSI), particularly, in a case that the SSB SCS is wider than the RMSI SCS, a time length of the SSB (symbol length) is shorter, and thus, neither the RMSI PDCCH nor the RMSI PDSCH may be FDMed with the SSB. In this case, the SSB and the RMSI PDCCH CORESET can be multiplexed on the different time resources and the different frequency resources.

The base station can transmit only one beam under a restriction of using analog beamforming. The base station can transmit one beam in a short time to suppress an overhead for beam sweeping by FDMing the RMSI PDSCH with the SSB.

Multiplexing pattern 3: the SSB and the RMSI PDCCH CORESET are FDMed.

The base station can transmit one beam in a short time by FDMing both the RMSI PDCCH and the RMSI PDSCH with the SSB. The base station can suppress an overhead for beam sweeping by switching the beam per SSB.

### <Channel Access Procedure>

Category 2 LBT and category 4 LBT are under study as a channel access procedure for starting the COT by the base station (gNB) as a Load Based Equipment (LBE) device. In a case that regarding a single DRS or a DRS multiplexed with non-unicast data (e.g., OSI, paging, RAR), a duty cycle of the DRS is 1/20 or less and a total time length of the DRS is 1 ms or less (in other words, in a case that transmission periodicity of the DRS is 20 ms or more and the total time length of the DRS is 1 ms or less), category 2 LBT of 25 µs is used similarly to the LTE LAA. In a case that the DRS duty cycle is larger than 1/20, or the total time length of the DRS is larger than 1 ms, category 4 LBT is used.

Category 2 LBT can be applied by transmitting the SS/PBCH block, the corresponding RMSI PDCCH and the corresponding RMSI PDSCH as an NR-U DRS within a short time length (1 ms or less). Category 2 LBT that is a 25 µs CCA without the random back off can heighten a channel access success probability for the NR-U DRS as compared to category 4 LBT with the random back off.

### <NR-U DRS>

The following arrangements 1 to 3 are under study that the SSB and a corresponding Type 0-PDCCH (RMSI PDCCH) are TDMed for the NR-U DRS, like multiplexing pattern 1.

### (Arrangement 1)

Arrangement 1 uses an SSB position in Rel. 15 within a slot. Arrangement 1 supports, for at least the first SSB within a slot, Type 0-PDCCH in symbols #0 and #1 for CORESET 0 having a length of two symbols, and Type 0-PDCCH in symbol #0 for CORESET having a length of one symbol. Arrangement 1 supports, for the second SSB within a slot, Type 0-PDCCH in symbols #6 and #7 for CORESET 0 having a length of two symbols, and Type 0-PDCCH in symbol #6 or #7 for CORESET having a length of one symbol.

### (Arrangement 2)

Arrangement 2 uses a new SSB position within a slot. Arrangement 2 supports, for at least the first SSB within a slot, Type 0-PDCCH in symbols #0 and #1 for CORESET 0 having a length of two symbols, and Type 0-PDCCH in symbol #0 for CORESET 0 having a length of one symbol. Arrangement 2 supports, for the second SSB within a slot, Type 0-PDCCH in symbols #7 and #8 for CORESET 0 having a length of two symbols, and Type 0-PDCCH in symbol #7 for CORESET having a length of one symbol.

### (Arrangement 3)

Arrangement 3 uses an SSB position in Rel. 15 within a slot. Arrangement 3 supports, for at least the first SSB within a slot, Type 0-PDCCH in symbols #0 and #1 for CORESET 0 having a length of two symbols, and Type 0-PDCCH in symbol #0 for CORESET 0 having a length of one symbol. Arrangement 3 supports, for the second SSB within a slot, Type 0-PDCCH in symbol #7 for CORESET 0.

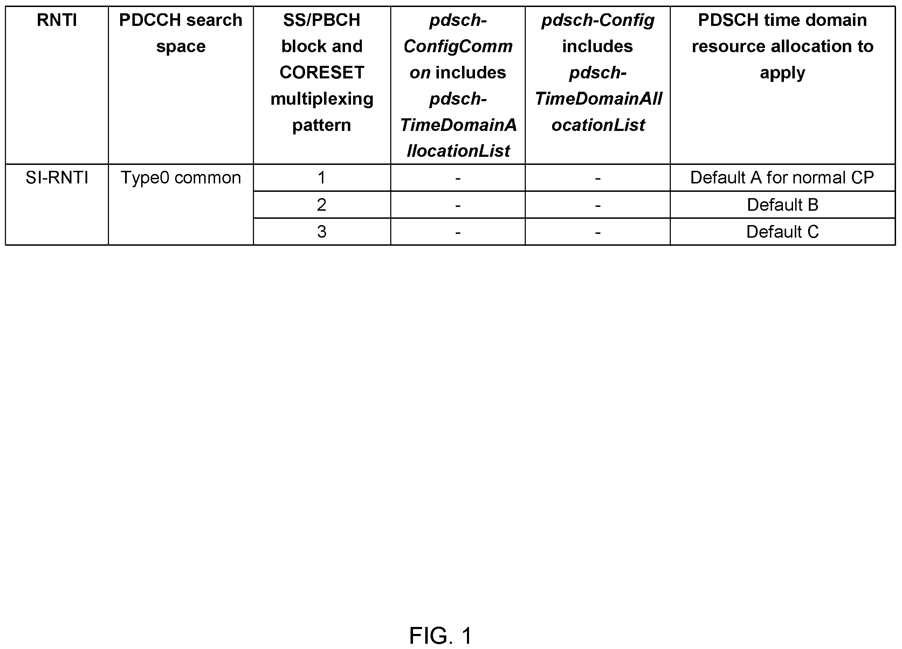

As shown in FIG. 1, in Rel. 15 NR, RMSI PDSCH time domain resource allocation using multiplexing pattern 1 is a default PDSCH time domain resource allocation A (default A) for normal Cyclic Prefix (CP).

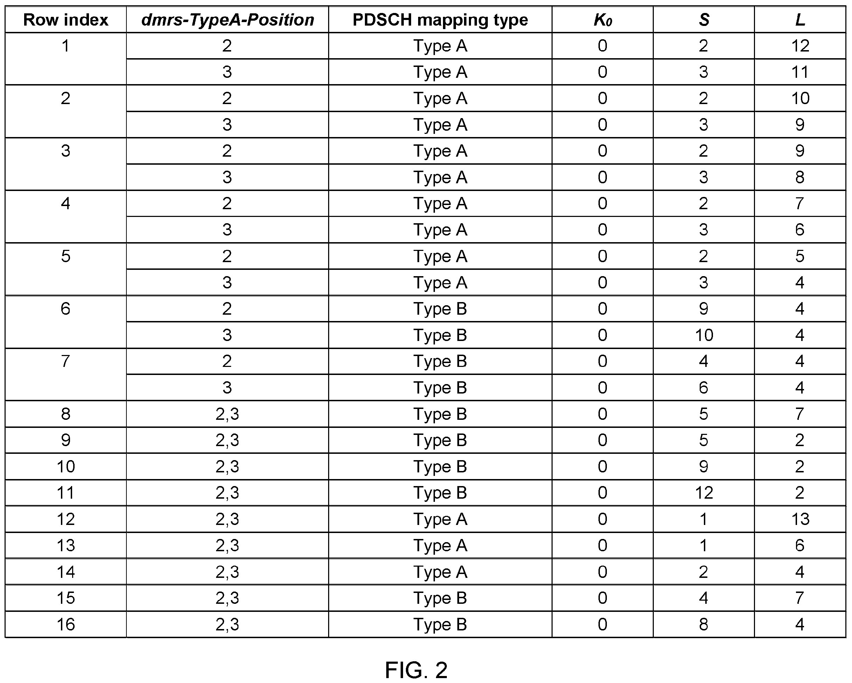

As shown in FIG. 2, in a table for the default PDSCH time domain resource allocation A for normal CP, a PDSCH mapping type, the number K0 of slots from the PDCCH to the PDSCH, a PDSCH start symbol position S, and the number of PDSCH symbols (time length) L are associated with a row index and a DMRS type A position (initial DMRS symbol). The row of this table may be referred to as a time domain resource allocation pattern, an allocation pattern, or the like.

In PDSCH mapping type A, the PDSCH start symbol S with respect to a start of a slot may be any of symbols #0 to #3, the number L of continuous symbols from a start symbol allocated to the PDSCH may be any of 3 to 14, and the initial DMRS symbol may be symbol #2 or #3 within the slot. In PDSCH mapping type B, the PDSCH start symbol S with respect to a start of a slot may be any of symbols #0 to #12, the number L of continuous symbols from a start symbol allocated to the PDSCH may be any of 2, 4, and 7, and the initial DMRS symbol may be a start symbol of the PDSCH resource within the slot.

In a case that two DRSs (SSB, RMSI PDCCH, RMSI PDSCH) are mapped within one slot, the PDSCH corresponding to the second SSB within a slot has a start symbol not of symbols #0 to #3, and thus, uses the PDSCH mapping type B, the number of PDSCH symbols is limited to any one of 2, 4, and 7.

Even if the PDCCH is included in the PDSCH symbol, in Rel. 15, the time domain resource allocation where the PDSCH start symbol is symbol #0 and the number of PDSCH symbols is 7, and the time domain resource allocation where the PDSCH start symbol is symbol #7 and the number of PDSCH symbols is 7 are not defined, and thus, the number of PDSCH symbols may be set to 4.

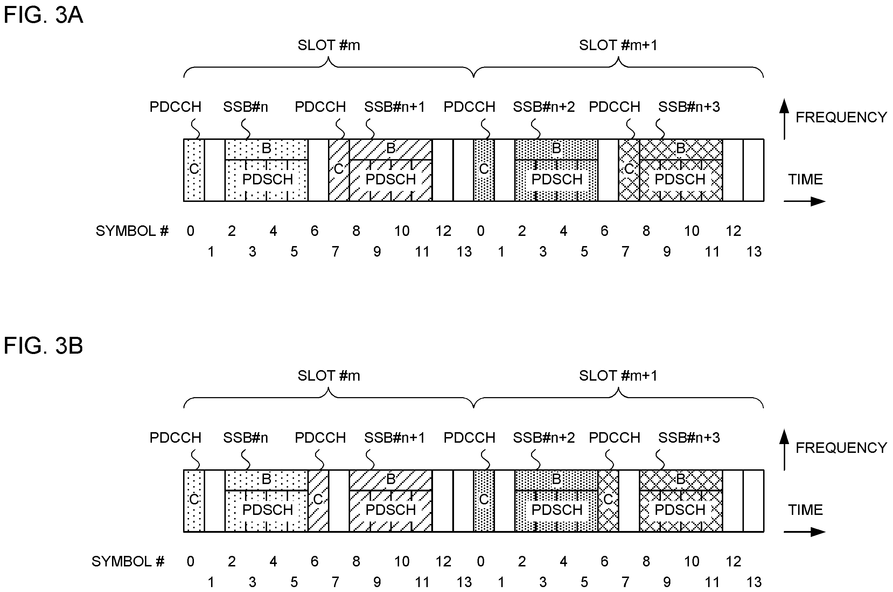

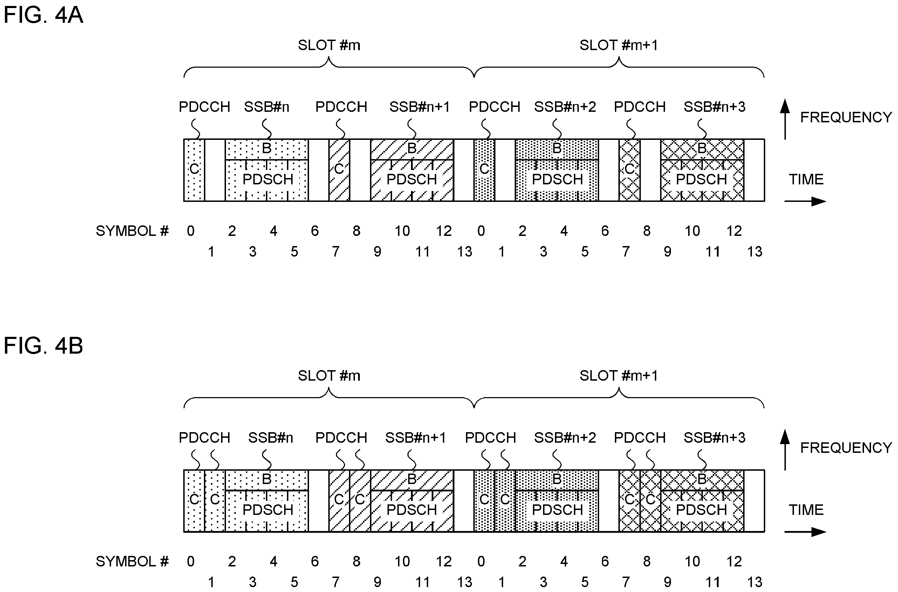

For the RMSI PDSCH time domain resource allocation in Rel. 15 and arrangements 1 to 3 described above, DRS configurations below shown in FIG. 3A, FIG. 3B, FIG. 4A, and FIG. 4B are considered.

FIG. 3A is a diagram to show an example of the DRS configuration in a case that arrangement 1a or arrangement 3a is used. Arrangement 1a is a case that a one-symbol CORESET 0 is used and Type 0-PDCCH in symbol #7 is used for the second SSB within a slot in arrangement 1. Arrangement 3a is a case that a one-symbol CORESET 0 is used in arrangement 3.

The first SSB within a slot is mapped in symbols #2 to #5 and the second SSB within the slot is mapped in symbols #8 to #11. Type 0-PDCCH corresponding to the first SSB (CORESET 0) is mapped in symbol #0, and Type 0-PDCCH corresponding to the second SSB (CORESET 0) is mapped in symbol #7. The PDSCH (SIB 1) may be mapped in a different band for the same symbol as the corresponding SSB.

FIG. 3B is a diagram to show an example of the DRS configuration in a case that arrangement 1b is used. Arrangement 1b is a case that a one-symbol CORESET 0 is used and Type 0-PDCCH in symbol #6 is used for the second SSB within a slot in arrangement 1.

The first SSB within a slot is mapped in symbols #2 to #5 and the second SSB within the slot is mapped in symbols #8 to #11. Type 0-PDCCH corresponding to the first SSB (CORESET 0) is mapped in symbol #0, and Type 0-PDCCH corresponding to the second SSB (CORESET 0) is mapped in symbol #6. The PDSCH (SIB 1) may be mapped in a different band for the same symbol as the corresponding SSB.

FIGS. 4A is a diagram to show an example of the DRS configuration in a case that arrangement 2a is used. Arrangement 2a is a case that a one-symbol CORESET 0 is used in arrangement 2.

The first SSB within a slot is mapped in symbols #2 to #5 and the second SSB within the slot is mapped in symbols #9 to #12. Type 0-PDCCH corresponding to the first SSB (CORESET 0) is mapped in symbol #0, and Type 0-PDCCH corresponding to the second SSB (CORESET 0) is mapped in symbol #7. The PDSCH (SIB 1) may be mapped in a different band for the same symbol as the corresponding SSB.

FIG. 4B is a diagram to show an example of the DRS configuration in a case that arrangement 2b is used. Arrangement 2b is a case that a two-symbol CORESET 0 is used in arrangement 2.

The first SSB within a slot is mapped in symbols #2 to #5 and the second SSB within the slot is mapped in symbols #9 to #12. Type 0-PDCCH corresponding to the first SSB (CORESET 0) is mapped in symbols #0 and #1, and Type 0-PDCCH corresponding to the second SSB (CORESET 0) is mapped in symbols #7 and #8. The PDSCH (SIB 1) may be mapped in a different band for the same symbol as the corresponding SSB.

In these cases, there is an unused symbol that any of SSB, PDCCH, and PDSCH is not mapped. The unused symbol reduces frequency use efficiency. In the unused symbol, another system may determine the idle by LBT to perform transmission. The base station may transmit a dummy signal in unused symbol, but the signal is not used by the UE, and thus, the frequency use efficiency is not improved.

In the NR-U, a timing when the base station is capable of transmission depends on the LBT result, and thus, the transmission start timing is not necessarily the beginning of the slot. If an initial PDSCH within the DL transmission burst is not across a slot boundary (falls within a slot), the number of PDSCH symbols differs depending on a LBT success timing (transmission start timing).

It is considered that the base station may prepare a plurality of PDSCHs (data) different in a size to use the data having a size corresponding to the LBT success timing for PDSCH transmission. However, preparing a plurality of pieces of data in parallel greatly burdens the base station. As such, for at least the initial PDSCH within the DL transmission burst, PDSCH configurations 1 to 4 are under study as candidates for PDSCH transmission within a partial slot.
(PDSCH Configuration 1) a PDSCH in Rel. 15 NR
(PDSCH configuration 2) a PDSCH punctured depending on the LBT result (the beginning or end of data is discarded)
(PDSCH configuration 3) PDSCH mapping type B having a time length of other than 2/4/7 symbols
(PDSCH configuration 4) a PDSCH across the slot boundary

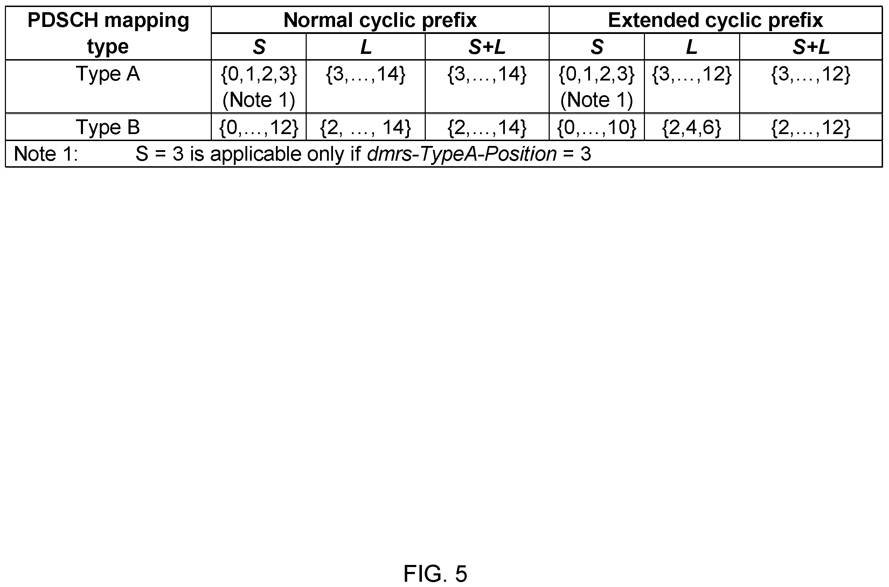

A study is underway, as an example of PDSCH configuration 3 as shown in FIG. 5, to support the number L of PDSCH symbols of 2 to 14 in PDSCH mapping type B to use an available symbol within a slot depending on the LBT result for DL data transmission.

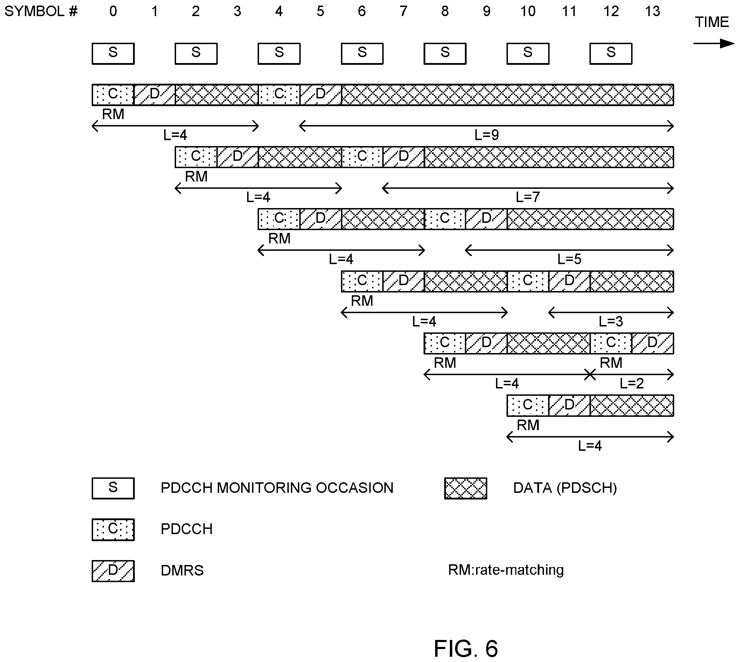

As shown in FIG. 6, the base station generates a PDSCH having the number of PDSCH symbols of 4 in advance, and starts transmission of the PDSCH, and then, generates and transmits a PDSCH for the rest of the symbols. The symbols of the number of PDSCH symbols L = 4 may overlap a symbol for the CORESET. The base station and the UE may perform rate matching of the PDSCH to the CORESET (around CORESET).

Blind detecting the DMRS and the PDCCH in the all symbols by the UE is very high in burden, and thus, it is considered that a transmission start timing granularity for the base station is not necessarily one symbol. As such, as shown in FIG. 6, the UE is configured with a PDCCH monitoring occasion per 2-symbol interval through a search space configuration. In a case that a minimum value of a monitoring granularity for the UE is two symbols, the number L of PDSCH symbols is limited to specific values (e.g., L = 9, 5, 3) besides the candidate values in Rel. 15.

In Rel. 15, it is defined as a mandatory function that the UE uses one PDCCH monitoring occasion within one slot, and as an optional function that the UE uses a plurality of PDCCH monitoring occasions within one slot (e.g., FG 3-5a, FG 3-5b). FG 3-5a may provide a definition of using a plurality of PDCCH monitoring occasions for type 1 CSS with dedicated RRC configuration, type 3 CSS, and UE specific SS. FG 3.5b (X, Y) may provide a definition of using a plurality of PDCCH monitoring occasions for the all search spaces. Here, X represents a minimum interval [OFDM symbol] between start symbols of respective PDCCH monitoring occasions, and Y represents the maximum number of consecutive symbols of each PDCCH monitoring occasion.

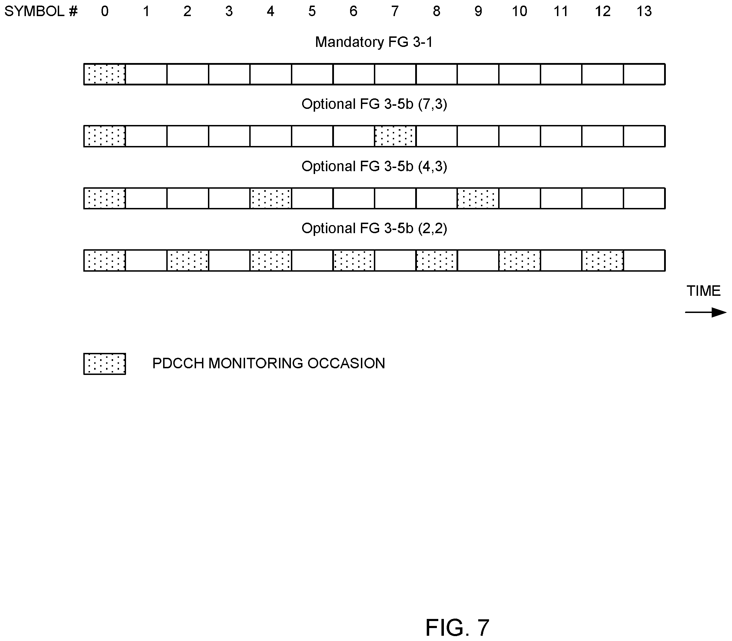

For example, as shown in FIG. 7, it is defined as the mandatory function that the UE monitors one PDCCH at the beginning of a slot (PDCCH monitoring occasion) (feature group (FG) 3-1). It is defined as the optional function that the UE monitors PDCCHs in symbols #0 and #7 (FG 3.5b (7, 3)). It is defined as the optional function that the UE monitors PDCCHs in symbols #0, #4, and #9 (FG 3.5b (4, 3)). It is defined as the optional function that the UE monitors PDCCHs in symbols #0, #2, #4, #6, #8, #10, and #12 (FG 3.5b (2, 2)).

In Rel. 15, receiving the PDSCH mapping type B using any of L = 2, 4, or 7 is a mandatory function.

In a case that Rel. 16 UE or UE supporting NR-U supports the PDSCH mapping type B supporting the number of PDSCH symbols other than L = 2, 4, and 7, how to define capability information (capability) is not determined.

As such, the inventors of the present invention came up with the idea of a method for improving the frequency use efficiency by performing DL transmission including as much as possible at least one of data useful for the UE and the reference signal at an NR-U target frequency after LBT success.

Hereinafter, embodiments according to the present disclosure will be described in detail with reference to the drawings. The radio communication methods according to respective embodiments may each be employed individually, or may be employed in combination.

In the present disclosure, Listen Before Talk (LBT), listening, Clear Channel Assessment (CCA), carrier sense, channel sensing, sensing, channel access procedure, and shared spectrum channel access may be interchangeably interpreted.

In the present disclosure, frequency, band, spectrum, carrier, component carrier (CC) and cell may be interchangeably interpreted.

In the present disclosure, NR-U frequency, NR-U target frequency, NR-U band, shared spectrum, unlicensed band, unlicensed spectrum, LAA SCell, LAA cell, primary cell (PCell, Primary Secondary Cell (PSCell), Special Cell (SpCell)), secondary cell (SCell), and frequency band to which channel sensing is applied may be interchangeably interpreted.

In the present disclosure, NR frequency, NR target frequency, licensed band, licensed spectrum, PCell, PSCell, SpCell, SCell, non-NR-U frequency, Rel. 15, NR, and frequency band to which channel sensing is not applied may be interchangeably interpreted.

Different frame structures may be used in the NR-U frequency and the NR frequency.

The radio communication system (NR-U, LAA system) may comply with a first radio communication standard (e.g., NR, LTE, or the like) (or may support the first radio communication standard).

Other systems coexisting with the radio communication system (coexistence systems, coexistence apparatuses) and other radio communication apparatuses (coexistence apparatuses) may comply with a second radio communication standard (or may support the second radio communication standard) such as Wi-Fi, Bluetooth (registered trademark), WiGig (registered trademark), wireless LAN (Local Area Network), IEEE 802.11, and LPWA (Low Power Wide Area), the second radio communication standard being different from the first radio communication standard. The coexistence system may be a system interfered with from a radio communication system, or a system interfering with a radio communication system.

In the present disclosure, transmission burst, DL transmission burst, DL transmission at the beginning of the COT, and DL transmission from the base station may be interchangeably interpreted.

In the present disclosure, at least one of a PDCCH and a GC-PDCCH may be referred as a specific PDCCH, a PDCCH, or the like. A DMRS for at least one of the PDCCH and the GC-PDCCH may be referred to as a PDCCH DMRS, a DMRS, or the like.

In the present disclosure, monitoring, blind detecting, blind decoding, and attempting to detect may be interchangeably interpreted.

In the present disclosure, downlink signal including one SSB, and RMSI PDCCH and RMSI PDSCH QCLed with the SSB (or transmitted using the same bean as the SSB), DRS, DRS unit, and NR-U DRS may be interchangeably interpreted. SSB, SS/PBCH block, beam, base station transmission beam, and first signal may be interchangeably interpreted.

RMSI PDCCH, DCI including CRC scrambled by an SI-RNTI and including system information indicator set to 0, PDCCH for scheduling RMSI PDSCH, PDCCH corresponding to SSB, RMSI CORESET, Type 0-PDCCH, CORESET 0, CORESET having index 0, PDCCH, and CORESET may be interchangeably interpreted.

RMSI PDSCH, PDSCH scheduled by way of DCI including CRC scrambled by an SI-RNTI and including system information indicator set to 0, system information, SIB 1, PDSCH carrying SIB 1, PDSCH corresponding to SSB, and PDSCH may be interchangeably interpreted.

The NR-U according to the present disclosure is not limited to the LAA, and may include a case of using the unlicensed band in a stand-alone mode.

### (Radio Communication Method)

### <First Embodiment>

The UE may support a specific symbol not supported by PDSCH mapping type B in Rel. 15, as the number L of PDSCH symbols of a specific PDSCH mapping type (or the number L of PDSCH symbols that can be specified by the specific PDSCH mapping type may include the specific number of symbols).

The specific PDSCH mapping type is a PDSCH mapping type supporting the number different from the number L of PDSCH symbols of PDSCH mapping type B in Rel. 15, and may be referred to as PDSCH mapping type B, new PDSCH mapping type, PDSCH mapping type B in Rel. 16 or later versions, PDSCH mapping type B for NR-U frequency, PDSCH mapping type C, and the like. The specific PDSCH mapping type may be applied to both the NR frequency and the NR-U frequency, or to only the NR-U frequency.

In the specific PDSCH mapping type, the PDSCH start symbol S capable of being specified (or supported) may include a value equal to or more than a certain value. The certain number may be 4, or a value not supported in the PDSCH mapping type A.

The specific number of symbols may include at least one of 5, 6, and 9.

### «RMSI PDSCH Configuration»

The specific number of symbols may be applied to the RMSI PDSCH at the NR-U frequency (default PDSCH time domain resource allocation A for normal CP (default A) at the NR-U frequency).

In the specific PDSCH mapping type, the number of PDSCH symbols may conform to one of the following configurations 1 and 2.

### <<<Configuration 1>>>

In a case that a position of the first SSB within a slot is symbol #2, #3, #4, or #5, and a position of the second SSB within the slot is symbol #8, #9, #10, or #11, the specific PDSCH mapping type may support a PDSCH of six symbols.

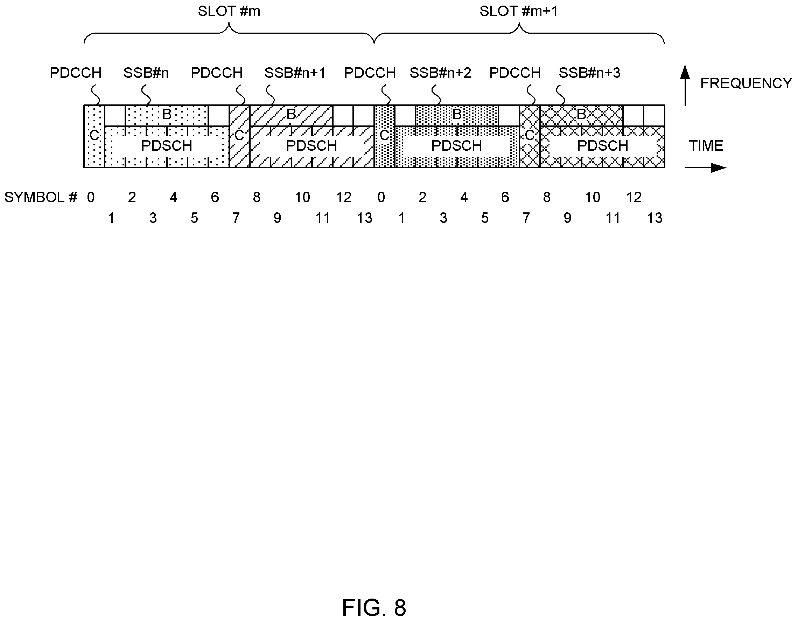

The DRS may use a one-symbol CORESET (e.g., arrangement 1a or 3a). For example, as shown in FIG. 8, Type 0-PDCCH corresponding to the first SSB (CORESET 0) may be mapped in symbol #0, and Type 0-PDCCH corresponding to the second SSB (CORESET 0) may be mapped in symbol #7. The PDSCH corresponding to the first SSB (SIB 1) may be mapped in symbol #1 to symbol #6 (six symbols), and the PDSCH corresponding to the second SSB (SIB 1) may be mapped in symbol #8 to symbol #13 (six symbols). The PDSCH may be mapped in a band different from a band for the SSB.

According to this configuration 1, the number of PDSCH symbols can be maximized, and the frequency use efficiency can be improved. The DRS configuration corresponding to the first SSB within a slot is the same as the DRS configuration corresponding to the second SSB, and thus, the burden on the UE can be suppressed. The unused symbol can be prevented from occurring, and another transmission can be prevented from being performed midway through the DL transmission burst.

### <<<Configuration 2>>>

In a case that a position of the first SSB within a slot is symbol #2, #3, #4, or #5, and a position of the second SSB within the slot is symbol #9, #10, #11, or #12, the specific PDSCH mapping type may support at least one of five symbols and six symbols as the number of PDSCH symbols.

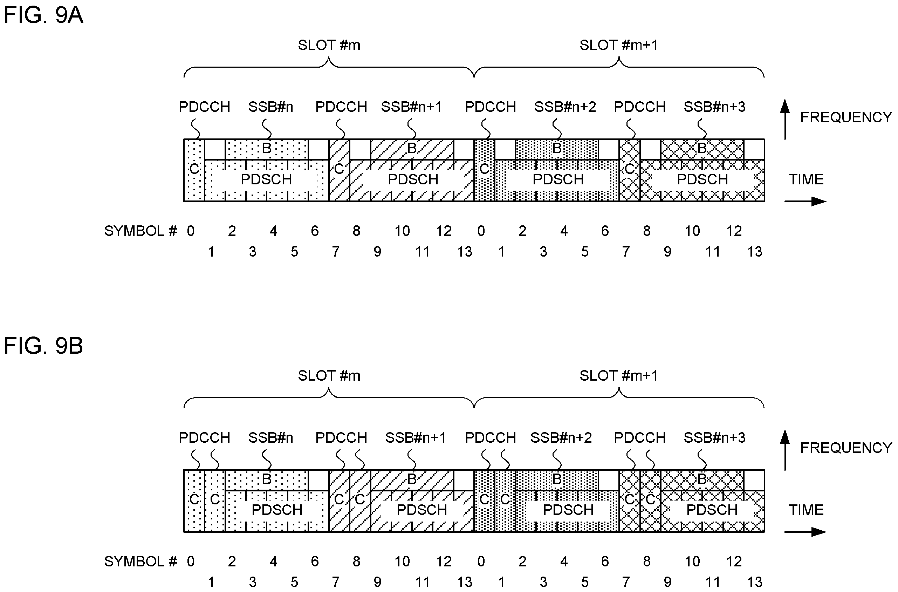

The DRS may use a one-symbol CORESET (e.g., arrangement 2a). For example, as shown in FIG. 9A, Type 0-PDCCH corresponding to the first SSB (CORESET 0) may be mapped in symbol #0, and Type 0-PDCCH corresponding to the second SSB (CORESET 0) may be mapped in symbol #7. The PDSCH corresponding to the first SSB (SIB 1) may be mapped in symbol #1 to symbol #6 (six symbols), and the PDSCH corresponding to the second SSB (SIB 1) may be mapped in symbol #8 to symbol #13 (six symbols). The PDSCH may be mapped in a band different from a band for the SSB.

The DRS may use a two-symbol CORESET (e.g., arrangement 2b). For example, as shown in FIG. 9B, Type 0-PDCCH corresponding to the first SSB (CORESET 0) may be mapped in symbols #0 and #1, and Type 0-PDCCH corresponding to the second SSB (CORESET 0) may be mapped in symbols #7 and #8. The PDSCH corresponding to the first SSB (SIB 1) may be mapped in symbol #2 to symbol #6 (five symbols), and the PDSCH corresponding to the second SSB (SIB 1) may be mapped in symbol #9 to symbol #13 (five symbols). The PDSCH may be mapped in a band different from a band for the SSB.

According to this configuration 2, the number of PDSCH symbols can be maximized, and the frequency use efficiency can be improved. The DRS configuration corresponding to the first SSB within a slot is the same as the DRS configuration corresponding to the second SSB, and thus, the burden on the UE can be suppressed. The unused symbol can be prevented from occurring, and another transmission can be prevented from being performed midway through the DL transmission burst.

In configurations 1 and 2, the example is shown in which the band for the PDSCH is different from the band for the SSB, and the band for the PDCCH includes the band for the SSB and the band for the PDSCH, but the band for the PDSCH may overlap the band for the SSB, the band for the PDSCH may include the band for the SSB, or the band for the PDSCH may be the same as the band for the PDCCH. The UE may perform rate matching of the PDSCH in an SSB resource.

### <<PDSCH Configuration>>

The specific number of symbols may be applied to a PDSCH other than the RMSI PDSCH at the NR-U frequency.

The UE may support at least one of the following capabilities 1 and 2.

### <<<Capability 1>>>

In the UE corresponding to the NR-U stand-alone, a function to receive a specific PDSCH mapping type may be a mandatory function for at least Type1-PDCCH CSS (for receiving a random access response) without dedicated RRC configuration (before RRC connection establishment), Type 0-PDCCH CSS (for receiving SIB 1), Type 0A-PDCCH CSS (for receiving other system information (OSI (SIB other than SIB 1))), and Type2-PDCCH CSS (for receiving paging).

The UE supporting the NR-U stand-alone and having this mandatory function allows the UE to receive a PDSCH of the specific PDSCH mapping type without reporting the UE capability information.

### <<<Capability 2>>>

A specification may define that, as the specific PDSCH mapping type, the specific number of PDSCH symbols (e.g., 6, 9, or the like) is supported in addition to the number of PDSCH symbols 2, 4, and 7 of PDSCH mapping type B in Rel. 15. The UE may report (notify) the UE capability information indicating whether to support the specific PDSCH mapping type. The function to receive the specific PDSCH mapping type may be a mandatory function with capability signaling or an optional function.

The base station may generate the first PDSCH of the certain number of symbols in advance to transmit the PDSCH of the certain number of symbols in response to the LBT success, and generate the second PDSCH of the remaining symbols to transmit the PDSCH of the remaining symbols. The certain number may be based on a time until the base station can prepare the second PDSCH transmission from the start of the first PDSCH transmission.

The specific number of PDSCH symbols may conform to any of the numbers 1 and 2 of PDSCH symbols.

### <<<<The Number 1 of PDSCH Symbols>>>>

The specific PDSCH mapping type may support, besides the number L of PDSCH symbols = 2, 4, or 7, L = 6 or 9.

The UE may be configured with the PDCCH monitoring occasion with 2-symbol interval. The base station may first transmit a PDSCH of four symbols, and generate, during the transmission, a PDSCH of the number of remaining symbols.

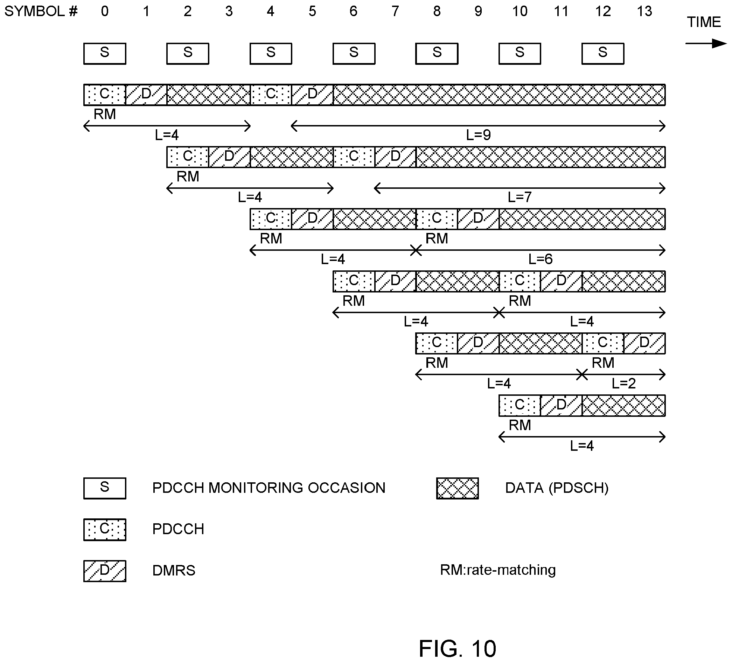

As shown in FIG. 10, the base station may generate the first PDSCH, concerning the first PDSCH transmission, by setting the transmission start symbol to the PDSCH start symbol S, setting the number L of PDSCH symbols to four, mapping the PDCCH (CORESET) in the PDSCH start symbol (symbol #0 for the PDSCH start symbol), mapping the DMRS (PDSCH DMRS) in a symbol next to the PDSCH start symbol (symbol #1 for the PDSCH start symbol), and performing rate matching of the PDSCH to the CORESET. The base station may configure the PDCCH monitoring occasion with 2-symbol interval (symbol #0, #2, #4, #6, #8, #10, and #12). The base station may perform the first PDSCH transmission generated in advance from the transmission start symbol of any of symbols #0, #2, #4, #6, #8, and #10 in response to the LBT success.

The UE may perform rate matching of the PDSCH to the CORESET in the first PDSCH transmission.

In a case that remaining symbols exist within the slot, the base station may generate a PDSCH in the remaining symbols.

In a case that the first PDSCH start symbol is symbol #0, the base station may, concerning the second PDSCH transmission, map the PDCCH in symbol #4, set the PDSCH start symbol to symbol #5, set the number of PDSCH symbols to 9, and map the DMRS in the PDSCH start symbol (symbol #5).

In a case that the first PDSCH start symbol is symbol #2, the base station may, concerning the second PDSCH transmission, map the PDCCH in symbol #6, set the PDSCH start symbol to symbol #7, set the number of PDSCH symbols to 7, and map the DMRS in the PDSCH start symbol (symbol #7).

In a case that the first PDSCH start symbol is symbol #4, the base station may, concerning the second PDSCH transmission, map the PDCCH in symbol #8, set the PDSCH start symbol to symbol #8 that is the same as the PDCCH, set the number of PDSCH symbols to 6, map the DMRS in a symbol next to the PDSCH start symbol (symbol #9), and perform rate matching of the PDSCH to the CORESET.

In a case that the first PDSCH start symbol is symbol #6, the base station may, concerning the second PDSCH transmission, map the PDCCH in symbol #10, set the PDSCH start symbol to symbol #10 that is the same as the PDCCH, set the number of PDSCH symbols to 4, map the DMRS in a symbol next to the PDSCH start symbol (symbol #11), and perform rate matching of the PDSCH to the CORESET.

In a case that the first PDSCH start symbol is symbol #8, the base station may, concerning the second PDSCH transmission, map the PDCCH in symbol #12, set the PDSCH start symbol to symbol #12 that is the same as the PDCCH, set the number of PDSCH symbols to 2, map the DMRS in a symbol next to the PDSCH start symbol (symbol #13), and perform rate matching of the PDSCH to the CORESET.

In a case that the first PDSCH start symbol is symbol #10, the base station may not perform the second PDSCH transmission.

The UE may, in the second PDSCH transmission, in a case that PDSCH start symbol overlaps the CORESET, perform rate matching of the PDSCH to the CORESET.

According to this PDSCH transmission method 1, the unused symbol can be prevented for occurring.

### <<<<The Number 2 of PDSCH Symbols>>>>

The specific PDSCH mapping type may support, besides the number L of PDSCH symbols = 2, 4, or 7, L = 6.

The UE may be configured with the PDCCH monitoring occasion with 2-symbol interval. The base station may first transmit a PDSCH of six symbols, and generate, during the transmission, a PDSCH of the number of remaining symbols.

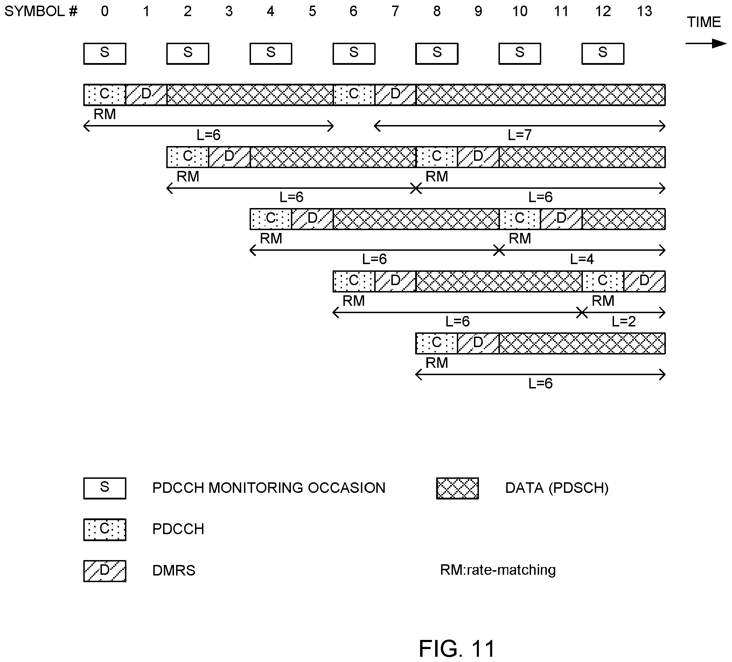

As shown in FIG. 11, the base station may generate the first PDSCH, concerning the first PDSCH transmission, by setting the number of PDSCH symbols to six, mapping the PDCCH in the PDSCH start symbol, mapping the DMRS in the PDSCH start symbol, and performing rate matching of the PDSCH to the CORESET. The base station may configure the PDCCH monitoring occasion in symbol #0, #2, #4, #6, #8, #10, and #12. The base station may perform the first PDSCH transmission generated in advance in any of symbols #0, #2, #4, #6, and #8 in response to the LBT success.

In a case that the first PDSCH start symbol is symbol #0, the base station may, concerning the second PDSCH transmission, map the PDCCH in symbol #6, set the PDSCH start symbol to symbol #7, set the number of PDSCH symbols to 7, and map the DMRS in the PDSCH start symbol (symbol #7).

In a case that the first PDSCH start symbol is symbol #2, the base station may, concerning the second PDSCH transmission, map the PDCCH in symbol #8, set the PDSCH start symbol to symbol #8 that is the same as the PDCCH, set the number of PDSCH symbols to 6, map the DMRS in a symbol next to the PDSCH start symbol (symbol #9), and perform rate matching of the PDSCH to the CORESET.

In a case that the first PDSCH start symbol is symbol #4, the base station may, concerning the second PDSCH transmission, map the PDCCH in symbol #10, set the PDSCH start symbol to symbol #10 that is the same as the PDCCH, set the number of PDSCH symbols to 4, map the DMRS in a symbol next to the PDSCH start symbol (symbol #11), and perform rate matching of the PDSCH to the CORESET.

In a case that the first PDSCH start symbol is symbol #6, the base station may, concerning the second PDSCH transmission, map the PDCCH in symbol #12, set the PDSCH start symbol to symbol #12 that is the same as the PDCCH, set the number of PDSCH symbols to 2, map the DMRS in a symbol next to the PDSCH start symbol (symbol #13), and perform rate matching of the PDSCH to the CORESET.

In a case that the first PDSCH start symbol is symbol #8, the base station may not perform the second PDSCH transmission.

According to this PDSCH transmission method 2, the unused symbol can be prevented for occurring. As compared to PDSCH transmission method 1, the number of candidates of L can be reduced.

### <Second Embodiment>

The base station may notify a transmission of an aperiodic CSI-RS in one symbol or two symbols at the end of the same slot by the PDCCH or the GC-PDCCH. The UE may be notified of the transmission of the aperiodic CSI-RS (trigger) in one symbol or two symbols at the end of the same slot by the PDCCH or the GC-PDCCH.

The UE may or may not support the specific PDSCH mapping type. The CSI-RS may be a non-zero power (NZP) CSI-RS, or a zero power (ZP) CSI-RS.

The GC-PDCCH may be used to notify of a transmission burst structure at the NR-U frequency. For example, the GC-PDCCH may notify of a slot format by a specific DCI format (e.g., DCI format 2_0). The UE may recognize a length of the DL transmission by the slot format.

The GC-PDCCH may notify of the slot format and the transmission of the aperiodic CSI-RS by the specific DCI format.

In a case that the base station, as shown in FIG. 10, FIG. 11, and the like, performs the first PDSCH transmission within a slot in response to the LBT success, and remaining symbols exist within the slot, the base station may perform the second PDSCH transmission.

The number L of PDSCH symbols in the first PDSCH transmission may be any of 2, 4, and 7, or may be another value such as 1, 3, 5, 6, 8, or 9.

The base station may perform PDSCH transmission in accordance with at least one of the following PDSCH transmission methods 1 to 3.

### <<PDSCH Transmission Method 1>>

The UE may not perform rate matching in the second PDSCH transmission within a slot.

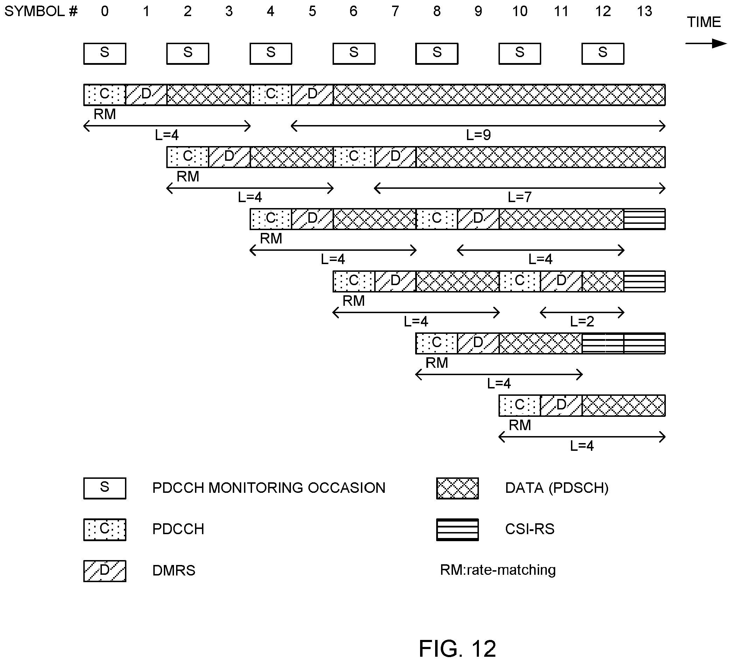

In FIG. 12, the specific PDSCH mapping type may support, besides the number L of PDSCH symbols = 2, 4, or 7, L = 9. A procedure of the first PDSCH transmission and a procedure of the second PDSCH transmission in the case that the first PDSCH start symbol is symbol #0, #2, or #10 are the same as those in FIG. 10.

The PDCCH may indicate the transmission of CSI-RS 3 to 5 symbols after.

In a case that the first PDSCH start symbol is symbol #4, the base station, concerning the second PDSCH transmission, maps the PDCCH (CORESET) in symbol #8, sets the PDSCH start symbol to symbol #9, sets the number of PDSCH symbols to four, maps the DMRS in the PDSCH start symbol (symbol #9), and maps the CSI-RS in remaining symbol #13.

In a case that the first PDSCH start symbol is symbol #6, the base station, concerning the second PDSCH transmission, maps the PDCCH in symbol #10, sets the PDSCH start symbol to symbol #11, sets the number of PDSCH symbols to two, maps the DMRS in the PDSCH start symbol (symbol #11), and maps the CSI-RS in remaining symbol #13.

In a case that the first PDSCH start symbol is symbol #8, the base station, concerning the second PDSCH transmission, maps the CSI-RS in remaining symbols #12 and #13.

According to PDSCH transmission method 1, the UE does not perform rate matching of the PDSCH to the CORESET in the second PDSCH transmission, making the UE processing simple and suppressing the burden.

### <<PDSCH Transmission Method 2>>

The UE may perform rate matching in the second PDSCH transmission within a slot.

The base station may multiplex the CSI-RS on the PDSCH symbol (resource allocated to the PDSCH). The UE may support receiving the CSI-RS multiplexed on the PDSCH symbol. The UE may perform rate matching of the PDSCH to the CSI-RS resource.

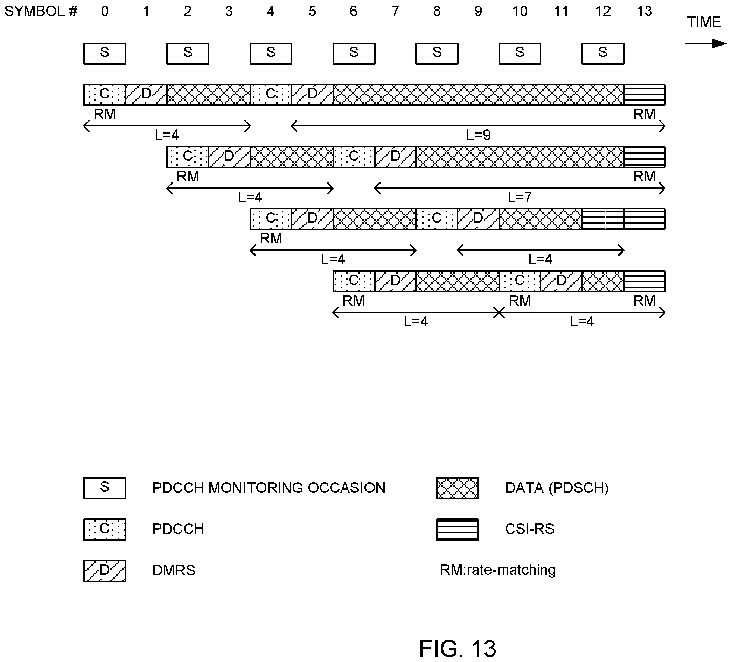

In FIG. 13, the specific PDSCH mapping type may support, besides the number L of PDSCH symbols = 2, 4, or 7, L = 9. A procedure of the first PDSCH transmission is the same as in FIG. 10. A procedure of the second PDSCH transmission in the case that the first PDSCH start symbol is symbol #8 or #10 may be the same as in FIG. 12.

In a case that the first PDSCH start symbol is symbol #0, the base station may, concerning the second PDSCH transmission, map the PDCCH in symbol #4, set the PDSCH start symbol to symbol #5, set the number of PDSCH symbols to nine, map the DMRS in the PDSCH start symbol (symbol #5), and map the CSI-RS in the PDSCH resource (symbol #13). The UE may perform rate matching of the PDSCH to the CSI-RS resource.

In a case that the first PDSCH start symbol is symbol #2, the base station may, concerning the second PDSCH transmission, map the PDCCH in symbol #6, set the PDSCH start symbol to symbol #7, set the number of PDSCH symbols to seven, map the DMRS in the PDSCH start symbol (symbol #7), and map the CSI-RS in the PDSCH resource (symbol #13). The UE may perform rate matching of the PDSCH to the CSI-RS resource.

In a case that the first PDSCH start symbol is symbol #4, the base station may, concerning the second PDSCH transmission, map the PDCCH in symbol #8, set the PDSCH start symbol to symbol #9, set the number of PDSCH symbols to four, map the DMRS in the PDSCH start symbol (symbol #9), and map the CSI-RS in the PDSCH resource (symbol #12). The UE may perform rate matching of the PDSCH to the CSI-RS resource. The base station may further map the CSI-RS after the PDSCH (in symbol #13).

In a case that the first PDSCH start symbol is symbol #6, the base station may, concerning the second PDSCH transmission, map the PDCCH in symbol #10, set the PDSCH start symbol to symbol #10 the same as the PDCCH, set the number of PDSCH symbols to four, map the DMRS in the PDSCH start symbol (symbol #7), and map the CSI-RS in the PDSCH resource (symbol #13). The UE may perform rate matching of the PDSCH to the PDCCH resource. The UE may perform rate matching of the PDSCH to the CSI-RS resource.

According to PDSCH transmission method 2, the reference signal (RS) density is increased at the beginning of the DL transmission burst, enabling time frequency tracking or the like and improving a received quality.

### <<PDSCH Transmission Method 3>>

The UE may not support the number of PDSCH symbols other than 2, 4, and 7 in PDSCH mapping type B.

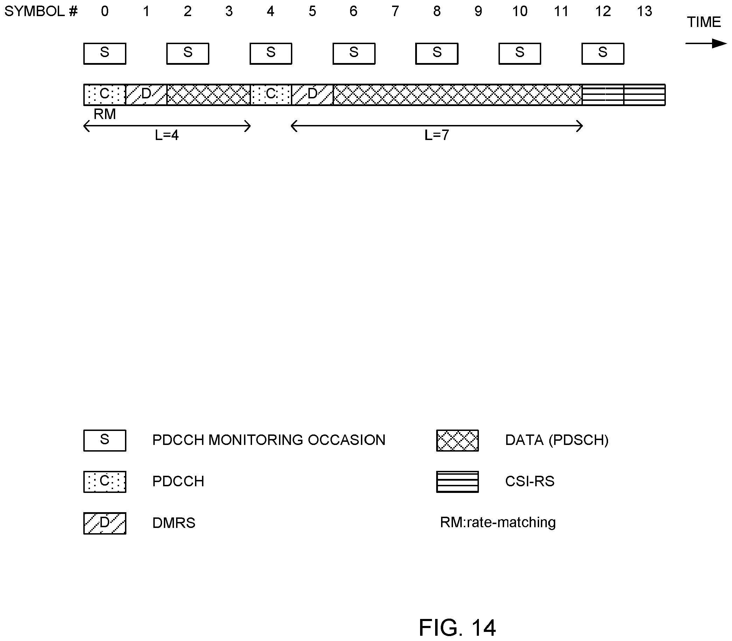

In FIG. 14, a procedure of the first PDSCH transmission is the same as in FIG. 10. A procedure of the second PDSCH transmission in the case that the first PDSCH start symbol is symbol #2, #4, #6, #8, or #10 may be the same as in FIG. 12 or FIG. 13.

In a case that the first PDSCH start symbol is symbol #0, the base station may, concerning the second PDSCH transmission, map the PDCCH in symbol #4, set the PDSCH start symbol to symbol #5, set the number of PDSCH symbols to seven, map the DMRS in the PDSCH start symbol (symbol #5), and map the CSI-RS after the PDSCH (in symbols #12 and #13).

According to PDSCH transmission method 3, the UE supporting NR-U uses the PDSCH mapping type B the same as in Rel. 15, making the UE processing simple and suppressing the burden.

The PDSCH transmission methods 1 to 3 may be combined. The base station may use a method among PDSCH transmission methods 1 to 3 depending on the start symbol of the first PDSCH transmission.

According the second embodiment described above, the unused symbol in the DL transmission burst can be prevented and transmission of other systems can be prevented.

### <Third Embodiment>

At least one of the optional functions of the UE in Rel. 15 regarding the PDCCH monitoring may be a mandatory function for the UE supporting NR-U (or the UE in Rel. 16 or later versions). The optional function may be using a plurality of PDCCH monitoring occasions within one slot (e.g., (FG 3-5a, 3-5b)). The UE supporting NR-U may necessarily support at least part of the PDCCH monitoring capability. The UE may have a mandatory function to monitor a plurality of PDCCH candidates within a slot.

This can support flexible PDCCH monitoring within a slot, and improve the efficiency of the channel access procedure.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

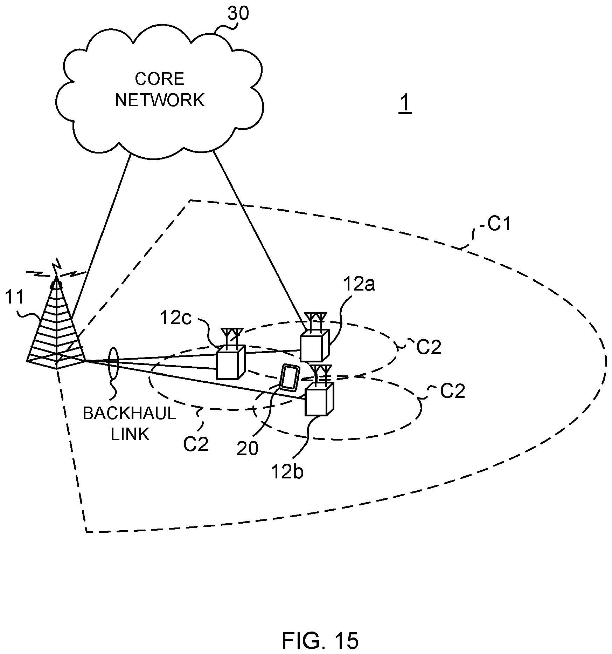

FIG. 15 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

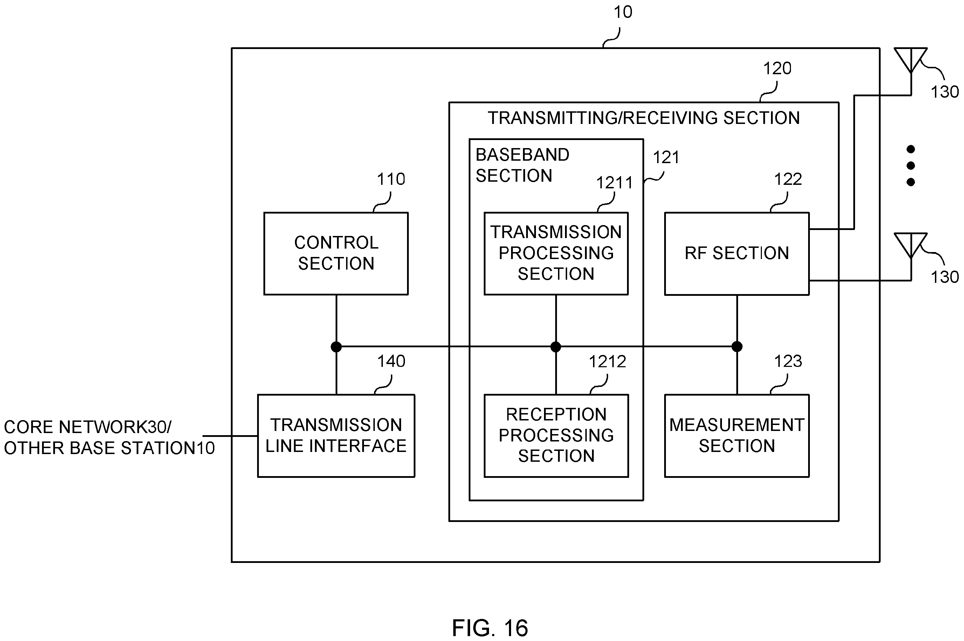

FIG. 16 is a diagram to show an example of a structure of the base station according to one embodiment. The base station 10 includes a control section 110, a transmitting/receiving section 120, transmitting/receiving antennas 130 and a transmission line interface (communication path interface) 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120 and the transmitting/receiving antennas 130.

### (User Terminal)

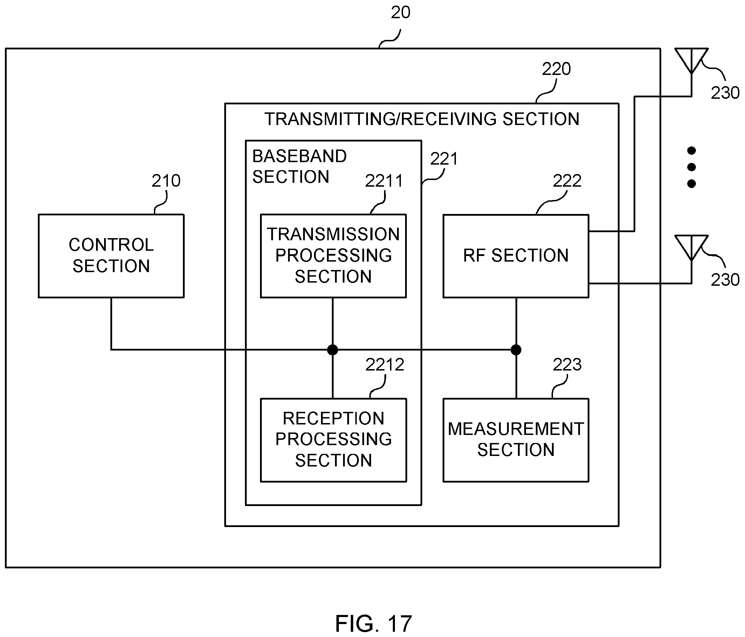

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

The transmitting/receiving section 220 may receive a downlink control channel and a downlink shared channel scheduled by the downlink control channel in one slot. The control section 210 may decode the downlink shared channel. A start symbol capable of being specified by a mapping type used by the downlink shared channel (a specific PDSCH mapping type, a PDSCH mapping type B, or the like) may include a symbol after first four symbol. The number of symbols capable of being specified by the mapping type may include a value other than 2, 4, and 7.

The transmitting/receiving section 220 may receive a synchronization signal block in the slot.

The control section 210 may perform rate matching of the downlink shared channel in a resource of the downlink control channel in the start symbol.

The downlink control channel may indicate a channel state information-reference signal (CSI-RS) transmission within the slot.

The control section 210 may have a mandatory function to monitor a plurality of downlink control channels within the slot.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

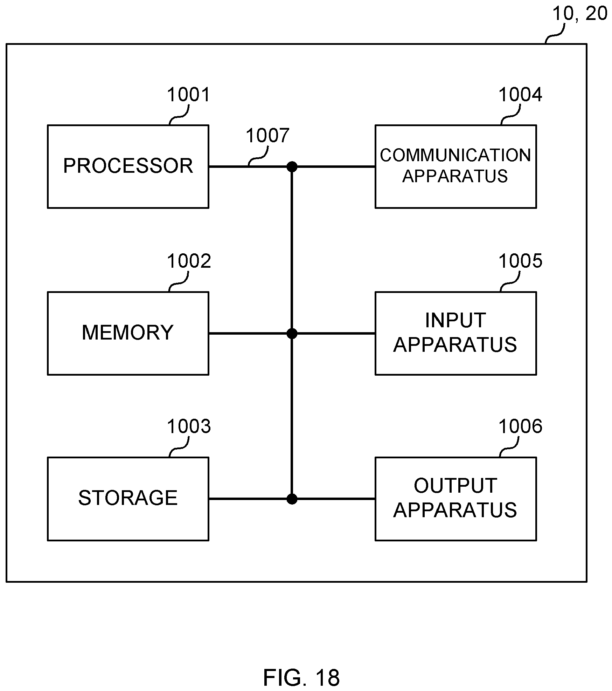

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG), "a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives a downlink control channel and a downlink shared channel scheduled by the downlink control channel in one slot; and
a control section that decodes the downlink shared channel, wherein
a start symbol capable of being specified by a mapping type used by the downlink shared channel includes a symbol after first four symbol, and
the number of symbols capable of being specified by the mapping type includes a value other than 2, 4, and 7.

2. The user terminal according to claim 1, wherein
the receiving section receives a synchronization signal block in the slot.

3. The user terminal according to claim 1 or 2, wherein
the control section performs rate matching of the downlink shared channel in a resource of the downlink control channel in the start symbol.

4. The user terminal according to any one of claims 1 to 3, wherein
the downlink control channel indicates a channel state information-reference signal (CSI-RS) transmission within the slot.

5. The user terminal according to any one of claims 1 to 4, wherein
the control section has a mandatory function to monitor a plurality of downlink control channels within the slot.

6. A radio communication method for a user terminal, the radio communication method comprising,:
receiving a downlink control channel and a downlink shared channel scheduled by the downlink control channel in one slot; and
decoding the downlink shared channel, wherein
a start symbol capable of being specified by a mapping type used by the downlink shared channel includes a symbol after first four symbol, and
the number of symbols capable of being specified by the mapping type includes a value other than 2, 4, and 7.
